# EUROPEAN PATENT APPLICATION

(11) **EP 4 260 935 A1**
(43) Date of publication of application: **18.10.2023**
(21) Application number: 21905245.3
(22) Date of filing: 13.10.2021
(51) Int. Cl.: B01J 20/08, B01J 20/30, C02F 1/28, C22B 7/00, C22B 26/12, C22B 3/24, H01M 10/54, C02F 101/10

(54) **ALUMINUM-BASED LITHIUM ION SIEVE, PREPARATION METHOD THEREFOR AND USE THEREOF**

(30) Priority: 18.12.2020 CN 202011504630
(71) Applicant: Hunan Brunp Recycling Technology Co., Ltd., Changsha, Hunan 410600 (CN); Guangdong Brunp Recycling Technology Co., Ltd, Foshan, Guangdong 528137 (CN); Hunan Brunp EV Recycling Co., Ltd., Changsha, Hunan 410600 (CN)
(72) Inventor: YANG, Ding, Changsha, Hunan 410600 (CN); CHEN, Ruokui, Changsha, Hunan 410600 (CN); QIAO, Yanchao, Changsha, Hunan 410600 (CN); ZHENG, Xianliang, Changsha, Hunan 410600 (CN); TAN, Feng, Changsha, Hunan 410600 (CN); LI, Changdong, Changsha, Hunan 410600 (CN)
(74) Representative: Meyer, Thorsten
(86) International application number: PCT/CN2021/123400
(87) International publication number: WO 2022/127316

(57) **Abstract**

Disclosed are an aluminum-based lithium ion-sieve (LIS), and a preparation method and use thereof. The aluminum-based LIS is Li₂SO₄·2Al(OH)₃·nH₂O coated with Al(OH)₃, where n is 1 to 4. The preparation method includes: reacting an aluminum salt and a lithium salt with an alkali to obtain an adsorbent intermediate LiOH·2Al(OH)₃·nH₂O; using a dilute sulfuric acid to obtain an aluminum-based lithium adsorbent Li₂SO₄·2Al(OH)₃·nH₂O; and filtering out and washing the adsorbent, mixing the adsorbent with a metaaluminate, and adjusting a pH to obtain the Li₂SO₄·2Al(OH)₃·nH₂O coated with Al(OH)₃. The aluminum-based LIS of the present disclosure has the advantages of high adsorption capacity and prominent stability, and can be used to efficiently recover low-concentration lithium in industrial wastewater. Moreover, the LIS is coated with aluminum hydroxide, which can effectively protect the structure from being corroded.

## Description

### TECHNICAL FIELD

The present disclosure belongs to the field of adsorbents, and specifically relates to an aluminum-based lithium ion-sieve (LIS), and a preparation method and use thereof.

### BACKGROUND

In the field of chemical power supply, as lithium has high electrochemical potential, low weight, and large specific energy, lithium foil and lithium rods are widely used in rechargeable lithium batteries. Some lithium batteries have long life, high voltage, high energy density, and no pollution, and can be used at a low temperature. The high-energy lithium battery is a promising power battery developed in recent years. Mobile phones, computers, and other devices that require long standby time all use lithium-ion batteries (LIBs). Moreover, in the electric vehicle industry, in order to reduce driving costs, lithium batteries are used instead of traditional gasoline engines to start vehicles.

With the development of power batteries, the disposal of scrap power batteries has become a challenge. At present, high-priced metals are recovered from scrap power batteries mainly by crushing and extraction. However, as lithium is difficult to extract, a large amount of lithium is easily enriched in a raffinate and cannot be effectively recovered.

The existing technologies for lithium extraction include lithium ion adsorption technologies using an adsorption resin, an aluminum salt adsorbent, a lithium-insertion active matrix material, a MnOz adsorbent, an adsorbent prepared from spodumene concentrate, and a LIS. The LIS has attracted more and more attention due to its large adsorption capacity, high adsorption rate, and other advantages. A structure of current LIS is easily corroded, such that it is difficult to accurately control a lithium concentration and purity in an eluate.

### SUMMARY

The present disclosure is intended to provide an aluminum-based LIS, and a preparation method and use thereof. The aluminum-based LIS has the advantages of high adsorption capacity and prominent stability, and can be used to effectively recover low-concentration lithium in industrial wastewater. Moreover, the LIS is coated with aluminum hydroxide, which can effectively protect the structure from being corroded.

To achieve the above objective, the present disclosure provides an aluminum-based LIS, which is Li₂SO₄-2Al(OH)₃·nH₂O coated with Al(OH)₃, where n is 1 to 4.

The present disclosure also provides a preparation method of the aluminum-based LIS, including the following steps:
(1) dissolving an aluminum salt in water, and subjecting a resulting solution to dispersion; and adding a lithium salt, heating, and adjusting a pH to higher than 7.0 to obtain an aluminum-based lithium adsorbent intermediate (LiOH·2Al(OH)₃·nH₂O), where n is 1 to 4;
(2) adjusting a pH of the aluminum-based lithium adsorbent intermediate obtained in step (1) to lower than 7.0, and filtering a resulting mixture to obtain a filter cake, which is an aluminum-based lithium adsorbent (Li₂SO₄·2Al(OH)₃·nH₂O); and
(3) washing the aluminum-based lithium adsorbent obtained in step (2), and mixing the aluminum-based lithium adsorbent with a metaaluminate solution; adjusting a pH, and filtering a resulting mixture to obtain a filter cake; and drying and grinding the filter cake to obtain the aluminum-based LIS.

In some embodiments, the aluminum salt in step (1) may be at least one from the group consisting of aluminum sulfate, aluminum chloride, aluminum nitrate, and sodium metaaluminate.

In some embodiments, the lithium salt in step (1) may be at least one from the group consisting of lithium hydroxide, lithium sulfate, lithium chloride, and lithium nitrate.

In some embodiments, in step (1), the pH may be adjusted to 9.0 to 11.0.

In some embodiments, the pH is adjusted to higher than 7.0 with at least one solution from the group consisting of a sodium hydroxide solution, a lithium hydroxide solution, a sodium carbonate solution, a sodium bicarbonate solution, and ammonia water in step (1)

In some embodiments, in step (1), the pH may be adjusted with at least one from the group consisting of sodium hydroxide, lithium hydroxide, sodium carbonate, sodium bicarbonate, and ammonia water.

In some embodiments, in step (1), the reaction may be conducted at 30°C to 100°C for 1 h to 72 h.

In some embodiments, in step (1), the dispersing may be conducted at a stirring rate controlled at 100 rpm to 700 rpm.

In some embodiments, in step (2), the pH may be adjusted to 2.5 to 5.5.

In some embodiments, in step (2), the pH may be adjusted to lower than 7.0 with at least one from the group consisting of a sulfuric acid solution, a sulfate-containing salt solution, and a mixed solution of the sulfuric acid and salt solutions.

In some other embodiments, the sulfuric acid solution may have a concentration of 0.5 mol/L to 2 mol/L.

In some other embodiments, the sulfate-containing salt solution is at least one from the group consisting of an aluminum sulfate solution, a nickel sulfate solution, a cobalt sulfate solution, a manganese sulfate solution, a ferric sulfate solution, and a ferrous sulfate solution.

In some other embodiments, the mixed solution of the sulfuric acid and salt solutions is at least one from the group consisting of a mixed solution of sulfuric acid and ferric chloride solutions, and a mixed solution of sulfuric acid and ferrous chloride solutions.

In some embodiments, in step (3), the metaaluminate may be at least one from the group consisting of sodium metaaluminate and potassium metaaluminate.

In some embodiments, in step (3), the pH may be adjusted to 3.5 to 11.0.

In some other embodiments, the pH is adjusted with at least one solution from the group consisting of a sodium hydroxide solution, a lithium hydroxide solution, a sodium carbonate solution, a sodium bicarbonate solution, ammonia water, an aluminum sulfate solution, a nickel sulfate solution, a cobalt sulfate solution, a manganese sulfate solution, a permanganic acid solution, a ferric sulfate solution, a ferrous sulfate solution, a ferric chloride solution, and a ferrous chloride solution.

In some embodiments, in step (3), the drying may be conducted at 40°C to 100°C.

Principle: in the present disclosure, an aluminum salt and a lithium salt reacts with an alkali for adjusting pH to obtain an adsorbent intermediate LiOH·2Al(OH)₃·nH₂O, where the n is 1 to 4; a pH is adjusted to 2.5 to 5.5 with a dilute sulfuric acid (for adjusting pH) to obtain an aluminum-based lithium adsorbent Li₂SO₄·2Al(OH)₃·nH₂O, where n is 1 to 4; and the adsorbent is filtered out, washed, and then mixed with a metaaluminate, and a pH is adjusted to 3.5 to 11 to obtain the Li₂SO₄·2Al(OH)₃·nH₂O coated with Al(OH)₃ (aluminum-based LIS).

The present disclosure also provides a method for treating industrial wastewater with the aluminum-based LIS, including the following steps:
(1) packing the aluminum-based LIS into a resin column, adding industrial wastewater, and conducting ion adsorption to obtain a post-adsorption solution and an aluminum-based LIS under adsorption saturation; and
(2) subjecting the aluminum-based LIS under adsorption saturation to counter-current washing and then to counter-current desorption to obtain a pure lithium solution.

In some embodiments, in step (1), the industrial wastewater may be wastewater with low lithium concentration and high impurity ion concentration or wastewater with high pH.

In some embodiments, in step (1), the post-adsorption solution is used to supplement the aluminum salt at the synthesis stage when being acidic and to supplement the metaaluminate at the synthesis stage when being alkaline.

In some embodiments, in step (1), the standing may be conducted for 10 min to 20 min.

In some embodiments, in step (2), the desorption for the lithium-ion adsorbent may be conducted with at least one from the group consisting of deionized water and tap water.

### Advantages of the present disclosure:

(1) The present disclosure is different from conventional aluminum-salt lithium-ion adsorbent in that the adsorbent of the present disclosure is coated with a substance and thus can be used in industrial wastewater and salt lake brine with high pH. The Al(OH)₃ shell plays a protective role for the lithium adsorbent during an adsorption and desorption process, that is, acid and base in industrial wastewater with high pH first react with Al(OH)₃ outside the lithium adsorbent, and Li ions can pass through the Al(OH)₃ shell due to small ion radius and thus are adsorbed by the lithium ion adsorbent serving as a crystal nucleus. Moreover, the aluminum hydroxide can be recovered by reverse-adjusting a pH of the post-adsorption solution.

(2) The present disclosure has simple process, low requirements on equipment, low energy consumption, low cost, and high product value (a resulting product has prominent structural performance and high selective adsorption, and can be used to effectively adsorb and recover lithium from cathode materials of scrap automobile power batteries), which is conducive to environmental protection and resource recycling and shows considerable economic benefits.

### BRIEF DESCRIPTION OF DRAWINGS

FIG. 1 is a process flow diagram of Example 1 of the present disclosure; and
FIG. 2 is an X-ray diffraction (XRD) pattern of the aluminum-based LIS of Example 1 of the present disclosure.

### DETAILED DESCRIPTION

In order to have a thorough understanding of the present disclosure, preferred experimental schemes of the present disclosure are described below with reference to examples to further illustrate the characteristics and advantages of the present disclosure. Any change or modification made without departing from the subject of the present disclosure can be understood by those skilled in the art. The protection scope of the present disclosure is determined by the claims.

If no specific conditions are specified in the examples of the present disclosure, conventional conditions or the conditions recommended by a manufacturer will be adopted. All of the raw materials, reagents, or the like which are not specified with manufacturers are conventional commercially-available products.

### Example 1

An aluminum-based LIS was provided in this example, which was Li₂SO₄-2Al(OH)₃·3H₂O coated with Al(OH)₃.

A preparation method of the aluminum-based LIS in this example included the following steps:
(1) 36 g of LiOH was weighed and dissolved in 200 ml of deionized water, then 360 g of Al₂(SO₄)₃ was added, and a resulting mixture was thoroughly mixed for 60 min by ultrasonic treatment; and the mixture was heated to 80°C in a water bath, and a pH was adjusted to 10.0 with sodium hydroxide to obtain an aluminum-based lithium adsorbent intermediate (LiOH·2Al(OH)₃·nH₂O);
(2) a pH of the aluminum-based lithium adsorbent intermediate obtained in step (1) was adjusted to 4 with 0.5 mol/L dilute sulfuric acid; after reaction was completed, aging was conducted for 4 h; a resulting system was filtered, and a resulting filter cake was washed 2 to 3 times to obtain an aluminum-based lithium adsorbent (Li₂SO₄·2Al(OH)₃·3H₂O); and
(3) the aluminum-based lithium adsorbent obtained in step (2) was filtered out by suction filtration and washed; 100 g of NaAlOz was weighed and dissolved in 500 ml of water, a resulting solution was mixed with the aluminum-based lithium adsorbent, and a pH was adjusted to 10.0; and a resulting mixture was filtered, and a resulting filter cake was collected, dried at 80°C for 24 h, and ground to obtain the aluminum-based lithium adsorbent (Li₂SO₄·2Al(OH)₃·3H₂O coated with Al(OH)₃).

A method for treating industrial wastewater with the aluminum-based LIS was provided, including the following steps:
(1) 50 g of the aluminum-based LIS was packed into a resin column, and then strongly-alkaline industrial wastewater (with a pH of 13, Li⁺ content) was added for ion adsorption; and the column was placed in a thermostatic water bath and the solution was stirred for 60 min to obtain a post-adsorption solution and an aluminum-based LIS under adsorption saturation; where the Li⁺ content in wastewater was determined by ICP before and after adsorption, and the pH was determined by a smart pH meter before and after adsorption; and
(2) the aluminum-based LIS under adsorption saturation was subjected to counter-current washing and then to counter-current desorption to obtain a pure lithium solution.

As determined above, the aluminum-based LIS exhibited an adsorption capacity of 2.7 mg/g for Li⁺, and the solution had a pH of 13 before adsorption and a pH of 8 after adsorption, indicating significant reduction in pH.

**Table 1**

| | Li⁺ concentration | pH |
|---|---|---|
| Industrial wastewater | 325 mg/L | 13 |
| Post-adsorption solution | 50 mg/L | 8 |
| Pure lithium solution | 536 mg/L | 6.5 |
| Adsorption capacity of the aluminum-based LIS for Li⁺ | 2.7 mg/g | |

It can be seen from Table 1 that the adsorbent showed high adsorption to Li in industrial wastewater; the pure lithium solution could be enriched to more than 500 mg/L through the counter-current desorption; and the Al(OH)₃ shell protected the aluminum-based adsorbent itself from being corroded during the adsorption process.

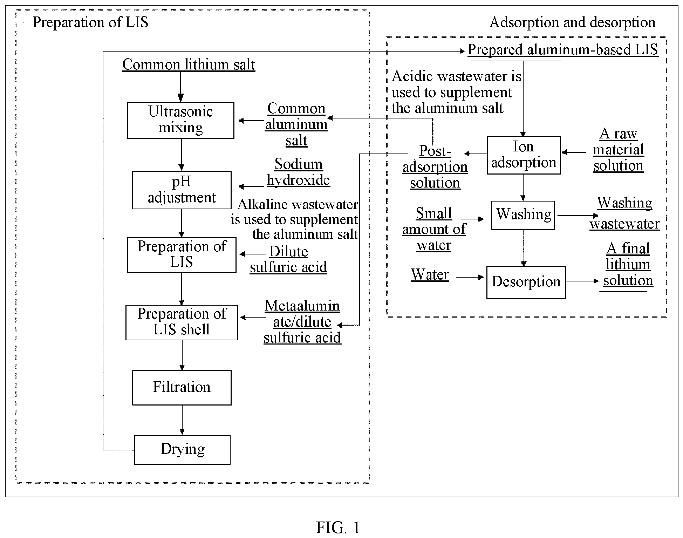

FIG. 1 is a process flow diagram of Example 1 of the present disclosure. It can be seen from FIG. 1 that a lithium salt and an aluminum salt react with an alkali for adjusting pH, a dilute sulfuric acid is used to obtain an aluminum-based lithium adsorbent, and finally the aluminum-based lithium adsorbent is mixed with a metaaluminate to obtain the aluminum-based LIS coated with Al(OH)₃, and the aluminum salt can also supplemented by reverse-adjusting a pH of the post-adsorption solution.

### Example 2

An aluminum-based LIS was provided in this example, which was Li₂SO₄·2Al(OH)₃·3H₂O coated with Al(OH)₃.

A preparation method of the aluminum-based LIS in this example included the following steps:
(1) 48 g of LiOH was weighed and dissolved in 200 ml of deionized water, then 180 g of Al(OH)₃ was added, and a resulting mixture was thoroughly mixed for 120 min by ultrasonic treatment; and the mixture was heated to 60°C in a water bath, and a pH was adjusted to 10.0 with sodium hydroxide to obtain an aluminum-based lithium adsorbent intermediate (LiOH·2Al(OH)₃·3H₂O);
(2) a pH of the aluminum-based lithium adsorbent intermediate obtained in step (1) was adjusted to 4 with 0.5 mol/L dilute sulfuric acid; after reaction was completed, aging was conducted for 6 h; a resulting system was filtered, and a resulting filter cake was collected to obtain an aluminum-based lithium adsorbent (Li₂SO₄·2Al(OH)₃·3H₂O); and
(3) the aluminum-based lithium adsorbent obtained in step (2) was washed 2 to 3 times; 300 g of NaAlOz was weighed and dissolved in 500 ml of water, a resulting solution was subjected to ultrasonic dispersion for 30 min and then mixed with the aluminum-based lithium adsorbent, and a pH was adjusted to 8.0; and a resulting mixture was filtered, and a resulting filter cake was collected, dried at 80°C for 24 h, and ground to obtain the aluminum-based lithium adsorbent (Li₂SO₄·2Al(OH)₃·3H₂O coated with Al(OH)₃).

A method for treating industrial wastewater with the aluminum-based LIS was provided, including the following steps:
(1) 50 g of the aluminum-based LIS was packed into a resin column, and then strongly-alkaline industrial wastewater (with a pH of 12) was added for ion adsorption; and the column was placed in a thermostatic water bath and the solution was stirred for 60 min to obtain a post-adsorption solution and an aluminum-based LIS under adsorption saturation; where the Li⁺ content in wastewater was determined by ICP before and after adsorption, and the pH was determined by a smart pH meter before and after adsorption; and
(2) the aluminum-based LIS under adsorption saturation was subjected to counter-current washing and then to counter-current desorption to obtain a pure lithium solution.

As determined above, the aluminum-based LIS exhibited an adsorption capacity of 2.1 mg/g for Li⁺, and the solution had a pH of 12 before adsorption and a pH of 7.5 after adsorption, indicating significant reduction in pH.

**Table 2**

| | Li⁺ concentration | pH |
|---|---|---|
| Industrial wastewater | 257 mg/L | 12 |
| Post-adsorption solution | 41 mg/L | 7.5 |
| Pure lithium solution | 424 mg/L | 6.3 |
| Adsorption capacity of the aluminum-based LIS for Li⁺ | 2.1 mg/g | |

It can be seen from Table 2 that the adsorbent showed high adsorption to Li in industrial wastewater; and the Al(OH)₃ shell protected the aluminum-based adsorbent itself from being corroded during the adsorption process.

### Example 3

An aluminum-based LIS was provided in this example, which was Li₂SO₄·2Al(OH)₃·nH₂O coated with Al(OH)₃, where the n was 1 to 4.

A preparation method of the aluminum-based LIS in this example included the following steps:
(1) 21 g of LiCl was weighed and dissolved in 200 ml of deionized water, then 210 g of Al(NO₃)₃ was added, and a resulting mixture was thoroughly mixed for 30 min by ultrasonic treatment; the mixture was heated to 90°C in a water bath, and a pH was adjusted to 12 with sodium hydroxide; and a resulting mixture was stirred for 12 h at a stirring rate of 120 rpm to obtain an aluminum-based lithium adsorbent intermediate (LiOH·2Al(OH)₃·nH₂O);
(2) a pH of the aluminum-based lithium adsorbent intermediate obtained in step (1) was adjusted to 4 with 0.5 mol/L dilute sulfuric acid; after reaction was completed, aging was conducted for 6 h; a resulting system was filtered, and a resulting filter cake was collected to obtain an aluminum-based lithium adsorbent (Li₂SO₄·2Al(OH)₃·nH₂O); and
(3) the aluminum-based lithium adsorbent obtained in step (2) was washed 2 to 3 times; 300 g of NaAlO₂ was weighed and dissolved in 500 ml of water, a resulting solution was mixed with the aluminum-based lithium adsorbent; a resulting mixture was subjected to ultrasonic dispersion for 30 min, and a pH was adjusted to 6.0; and a resulting mixture was filtered, and a resulting filter cake was collected, dried at 80°C for 24 h, and ground to obtain the aluminum-based lithium adsorbent (Li₂SO₄·2Al(OH)₃·nH₂O coated with Al(OH)₃).

A method for treating industrial wastewater with the aluminum-based LIS was provided, including the following steps:
(1) 50 g of the aluminum-based LIS was packed into a resin column, and then strongly-alkaline industrial wastewater (with a pH of 13) was added for ion adsorption; and the column was placed in a thermostatic water bath and the solution was stirred for 60 min to obtain a post-adsorption solution and an aluminum-based LIS under adsorption saturation; where the Li⁺ content in wastewater was determined by ICP before and after adsorption, and the pH was determined by a smart pH meter before and after adsorption; and
(2) the aluminum-based LIS under adsorption saturation was subjected to counter-current washing and then to counter-current desorption to obtain a pure lithium solution.

As determined above, the aluminum-based LIS exhibited an adsorption capacity of 2.3 mg/g for Li⁺, and the solution had a pH of 13 before adsorption and a pH of 8.5 after adsorption, indicating significant reduction in pH.

**Table 3**

| | Li⁺ concentration | pH |
|---|---|---|
| Industrial wastewater | 431 mg/L | 13 |
| Post-adsorption solution | 196 mg/L | 8.5 |
| Pure lithium solution | 579 mg/L | 6 |
| Adsorption capacity of the aluminum-based LIS for Li⁺ | 2.3 mg/g | |

It can be seen from Table 3 that the adsorbent showed high adsorption to Li in industrial wastewater; the pure lithium solution could be enriched to more than 500 mg/L through multiple counter-current desorption; and the Al(OH)₃ shell protected the aluminum-based adsorbent itself from being corroded during the adsorption process.

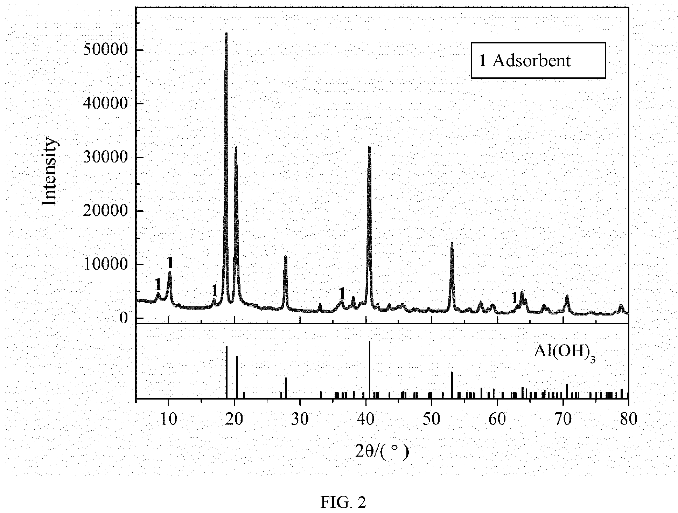

FIG. 2 shows the XRD result of the product. It can be seen that the peak intensity of Al(OH)₃ was stronger than that of the adsorbent; and the absorption peak of aluminum hydroxide in the prepared product covered the absorption peak of the lithium-ion adsorbent, indicating that an aluminum-based lithium-ion adsorbent coated with aluminum hydroxide was synthesized.

The aluminum-based LIS and a preparation method and use thereof provided in the present disclosure are described in detail above, and specific examples are used herein to illustrate the principle and implementation of the present disclosure. The examples are illustrated above merely to help understand the method and core ideas thereof (including the optimal mode) of the present disclosure and allow any person skilled in the art to practice the present disclosure, including manufacturing and using any device or system and implementing any combined method. It should be noted that several improvements and modifications may be made by persons of ordinary skill in the art without departing from the principle of the present disclosure, and these improvements and modifications should also fall within the protection scope of the present disclosure. The protection scope of the present disclosure is defined by the claims and may encompass other examples that those skilled in the art can think of. If these other examples have structural elements that are not different from the literal expression in the claims or include equivalent structural elements that are not substantially different from the literal expression in the claims, they should also be included in the scope of the claims.

## Claims

1. An aluminum-based lithium ion-sieve (LIS), wherein the aluminum-based LIS is Li₂SO₄·2Al(OH)₃·nH₂O coated with Al(OH)₃, wherein n is 1 to 4.

2. A preparation method of the aluminum-based LIS according to claim 1, comprising the following steps:
(1) dissolving an aluminum salt in water, and subjecting a resulting solution to dispersion; and adding a lithium salt, heating, and adjusting a pH to higher than 7.0 to obtain an aluminum-based lithium adsorbent intermediate (LiOH·2Al(OH)₃·nH₂O), wherein n is 1 to 4;
(2) adjusting a pH of the aluminum-based lithium adsorbent intermediate obtained in step (1) to lower than 7.0, and filtering a resulting mixture to obtain a filter cake, which is an aluminum-based lithium adsorbent (Li₂SO₄·2Al(OH)₃·nH₂O); and
(3) washing the aluminum-based lithium adsorbent obtained in step (2), and mixing the aluminum-based lithium adsorbent with a metaaluminate solution; adjusting a pH, and filtering a resulting mixture to obtain a filter cake; and drying and grinding the filter cake to obtain the aluminum-based LIS.

3. The preparation method according to claim 2, wherein the aluminum salt in step (1) is at least one from the group consisting of aluminum sulfate, aluminum chloride, aluminum nitrate, and sodium metaaluminate.

4. The preparation method according to claim 2, wherein the lithium salt in step (1) is at least one from the group consisting of lithium hydroxide, lithium sulfate, lithium chloride, and lithium nitrate.

5. The preparation method according to claim 2, wherein the pH is adjusted to 9.0 to 11.0 in step (1); and the reaction is conducted at 30°C to 100°C for 1 h to 72 h in step (1).

6. The preparation method according to claim 2, wherein the pH is adjusted to higher than 7.0 with at least one solution from the group consisting of a sodium hydroxide solution, a lithium hydroxide solution, a sodium carbonate solution, a sodium bicarbonate solution, and ammonia water in step (1).

7. The preparation method according to claim 2, wherein in step (2), the pH is adjusted to lower than 7.0 with at least one from the group consisting of a sulfuric acid solution, a sulfate-containing salt solution, and a mixed solution of the sulfuric acid and salt solutions; the sulfuric acid solution has a concentration of 0.5 mol/L to 2 mol/L; and the sulfate-containing salt solution is at least one from the group consisting of an aluminum sulfate solution, a nickel sulfate solution, a cobalt sulfate solution, a manganese sulfate solution, a ferric sulfate solution, and a ferrous sulfate solution; and the mixed solution of the sulfuric acid and salt solutions is at least one from the group consisting of a mixed solution of sulfuric acid and ferric chloride solutions and a mixed solution of sulfuric acid and ferrous chloride solutions.

8. The preparation method according to claim 2, wherein in step (3), the pH is adjusted to 3.5 to 11.0; and the pH is adjusted with at least one solution from the group consisting of a sodium hydroxide solution, a lithium hydroxide solution, a sodium carbonate solution, a sodium bicarbonate solution, ammonia water, an aluminum sulfate solution, a nickel sulfate solution, a cobalt sulfate solution, a manganese sulfate solution, a permanganic acid solution, a ferric sulfate solution, a ferrous sulfate solution, a ferric chloride solution, and a ferrous chloride solution.

9. The preparation method according to claim 2, wherein the metaaluminate in step (3) is at least one from the group consisting of sodium metaaluminate and potassium metaaluminate.

10. A method for treating industrial wastewater with the aluminum-based LIS according to claim 1, comprising the following steps:
(1) packing the aluminum-based LIS into a resin column, adding industrial wastewater, and conducting ion adsorption to obtain a post-adsorption solution and an aluminum-based LIS under adsorption saturation; and
(2) subjecting the aluminum-based LIS under adsorption saturation to counter-current washing and then to counter-current desorption to obtain a pure lithium solution.
